# EUROPÄISCHE PATENTSCHRIFT

(11) **EP 1 605 364 B1**
(45) Veröffentlichungstag und Bekanntmachung des Hinweises auf die Patenterteilung: **11.07.2007**
(21) Anmeldenummer: 05005462.6
(22) Anmeldetag: 14.03.2005
(51) Int. Cl.: G06F 13/38, H04L 12/28

(54) **Informationsaustauscheinrichtung**
Information exchange apparatus
Dispositif d'échange d'information

(30) Priorität: 12.06.2004 DE 102004030375
(43) Veröffentlichungstag der Anmeldung: 14.12.2005
(73) Patentinhaber: Insta Elektro GmbH, 58511 Lüdenscheid (DE)
(72) Erfinder: Schlicht, Thomas Dipl.Ing., 58093 Hagen (DE)

(56) Entgegenhaltungen:
- WO-A-00/19284
- US-A- 5 555 498
- US-B1- 6 624 745

## Beschreibung

Die vorliegende Erfindung geht von einer gemäß Oberbegriff des Hauptanspruches konzipierten Informationsaustauscheinrichtung, insbesondere für an Bussysteme anschließbare Geräte der Gebäudesystemtechnik aus.

Derartige busbasierte Informationsaustauscheinrichtungen sind in der Regel dafür vorgesehen, eine Vielzahl von in Gebäuden installierte Geräte einerseits mit der notwendigen Betriebsspannung zu versorgen und andererseits datentechnisch zum Zwecke des Informationsaustausches über ein Bussystem miteinander zu vernetzen.

Ein dem Oberbegriff des Hauptanspruches entsprechendes Bussystem der Gebäudesystemtechnik ist durch die EP 0 344 609 B1 bekannt geworden. Ein derartiges Bussystem stellt für sich genommen eine Informationsaustauscheinrichtung, insbesondere für an Bussysteme anschließbare Geräte der Gebäudesystemtechnik dar und weist eine Vielzahl von Busankopplern mit einer genormten Steckeraufnahmeeinrichtung auf, an die jeweils über eine genormte Steckeinrichtung die zu installierenden Geräte anzuschließen sind. Während des Busbetriebes werden über diese genormte Schnittstelle die zur Funktion bzw. zur Inbetriebnahme einer Installation notwendigen Informationen ausgetauscht. Dabei können Informationen zwischen den einzelnen Geräten oder aber einem an das Bussystem angeschlossenen PC (Personal Computer) und den Geräten ausgetauscht werden. Insbesondere bei der Inbetriebnahme einer neuen Installation bzw. bei der Optimierung einer bereits vorhandenen Gebäudeinstallation mit einer Vielzahl von Geräten sind Informationen mit großen Datenmengen auszutauschen. Wird ein solcher Austausch direkt über das Bussystem vorgenommen, erfordert dies wegen der geringen Übertragungsgeschwindigkeit einen beachtlichen Zeitaufwand, der oftmals in der Praxis nicht mehr tolerabel ist.

Des Weiteren sind durch die WO 00/192 84 A und die US-A-5 555 498 jeweils Informationsaustauscheinrichtungen bekannt geworden, welche insbesondere für an Bussysteme anschließbare Geräte der Gebäudesystemtechnik vorgesehen sind. Die Geräte sind zum Informationsaustausch und zur Funktionserfüllung jeweils über eine genormte Steckeinrichtung an die genormte Steckeraufnahmeeinrichtung eines zugehörigen Busankopplers des Bussystems anschließbar, wobei zum Informationsaustausch zumindest ein, zumindest über eine direkte serielle Verbindung mit einem PC in Verbindung stehendes Austauschmodul vorgesehen ist. Sollen bei solchen Informationsaustauscheinrichtungen z. B. zur Programmierung, Parametrierung und/oder ein Update oder Downgrade der angeschlossenen Geräte größere Datenmengen ausgetauscht werden, muss dies zwangsläufig über das Bussystem mit seiner geringen Datenübertragungsgeschwindigkeit vorgenommen werden. Muss bei solchen Informationsaustauscheinrichtungen eine Programmierung, Parametrierung und/oder ein Update oder Downgrade der angeschlossenen Geräte vorgenommen werden, so ist wegen der über das Bussystem vorzunehmenden Datenübertragung zudem ein normaler Betrieb des Bussystems nur noch stark eingeschränkt bzw. überhaupt nicht mehr möglich.

Der vorliegenden Erfindung liegt deshalb die Aufgabe zugrunde, eine Informationsaustauscheinrichtung für an Bussysteme der Gebäudesystemtechnik anschließbare Geräte zu schaffen, die es bei Freihaltung der Übertragungskapazität des Bussystems ermöglicht, Informationen mit großen Datenmengen sicher und besonders schnell zwischen einem PC (Personal Computer) und den zum Betrieb notwendigen Geräten auszutauschen.

Diese Aufgabe wird durch die im Hauptanspruch angegebenen Merkmale gelöst. Bei einer solchermaßen ausgebildeten Informationsaustauscheinrichtung ist besonders vorteilhaft, dass auf kostengünstige Art und Weise besonders schnell große Datenmengen beinhaltende Informationen über die bei den Geräten sowieso vorhandene genormte Steckeinrichtung übertragen werden können, so dass kein Zusatzaufwand an den Geräten notwendig ist. Das Bussystem bleibt weiterhin während der Programmierung, Parametrierung und/oder ein Update oder Downgrade der Geräte einsatzfähig, wobei lediglich die Funktionen der vom Bussystem abgenommenen Geräte nicht zur Verfügung stehen.

Weitere vorteilhafte Ausgestaltungen des erfindungsgemäßen Gegenstandes sind in den Unteransprüchen angegeben. Anhand eines prinziphaft dargestellten Ausführungsbeispiels sei der erfindungsgemäße Gegenstand näher erläutert.

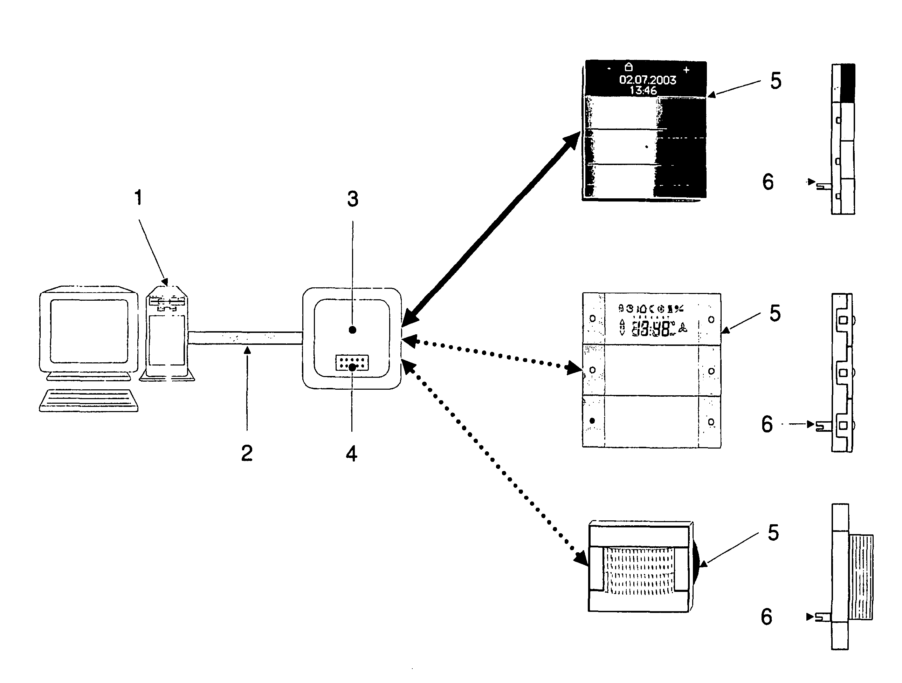

Wie aus der Zeichnung hervorgeht, besteht eine solche Informationsaustauscheinrichtung im Wesentlichen aus einem PC 1, an den über eine serielle Verbindung 2 ein Austauschmodul 3 mit einer genormten Steckeraufnahmeeinrichtung 4 angeschlossen ist. Die serielle Verbindung 2 ist dabei über einen USB-Anschluss (Universal Serial Bus) des PCs 1 hergestellt.

Geräte 5 bzw. Applikationsmodule, wie z. B. Wächter, Steuereinrichtungen, Schalter, Taster usw. nach dem EIB-Standard besitzen zum Aufstecken auf einen zugehörigen Busankoppler des EIB-Bussystems (European Installation. Bus) eine mit einem Stecker 6 versehene, normierte Schnittstelle, über die innerhalb des EIB-Bussystems Informationen ausgetauscht werden können. Der Austausch von Informationen ist sowohl für den regulären Betrieb des Gebäudeinstallationssystems notwendig, wobei Informationen mit relativ kleinen Datenmengen ausgetauscht werden müssen. Es ist aber auch notwenig, Informationen für Programmier- und Parametriervorgänge bzw. Firmware, Updates und Downgrads insbesondere bei der Inbetriebnahme eines neu installierten Gebäudeinstallationssystems notwendig, wobei dann Informationen mit großen Datenmengen ausgetauscht werden müssen.

Um Programmier- und Parametriervorgänge bzw. Updates/Downgrades über das EIB-Bussystem vornehmen zu können, ist eine spezielle Software und Hardware (ETS, econ, AST usw.) notwendig. Über die normierte Schnittstelle wird dann über einen PC den an das EIB-Bussystem angeschlossenen Geräten 5 speziell adressierte Telegramme bzw. Informationen zugestellt. Diese gelangen über das EIB-Bussystem, den zugehörigen Busankoppler und die normierte Schnittstelle an das angeschlossene, mit der entsprechenden Adresse versehene Gerät 5 bzw. Applikationsmodul. Dies geschieht jedoch mit einer festen Übertragungsgeschwindigkeit, wobei das EIB-Bussystem maximal 9,6 kBps übertragen kann. Die Übertragung von Informationen, insbesondere bei Informationen mit großen Datenmengen ist aus diesem Grunde relativ langwierig und in der Praxis oftmals nicht mehr tolerabel.

Aus diesem Grunde kann bei der erfindungsgemäßen Informationsaustauscheinrichtung das Gerät 5 bzw. Applikationsmodul von seinem Busankoppler entfernt werden und wird dann auf das Austauschmodul 3 mit der genormten Steckeraufnahmeeinrichtung 4 bzw. Schnittstelle aufgesteckt. Das Austauschmodul 3 steht zur schnellen Datenübertragung über eine serielle Verbindung 2 direkt mit dem USB-Anschluss des PC 1 in Verbindung. Damit wird das Gerät 5 bzw. das Applikationsmodul also direkt mit Hilfe der speziellen Software mit den zur einwandfreien Funktion notwendigen Informationen bzw. Daten versorgt. Eine Programmierung, Parametrierung und/oder Update bzw. Downgrades kann also, ohne dass das EIB-Bussystem belastet wird schnell und einfach durchgeführt werden. Die Übertragungsgeschwindigkeit kann aus diesem Grunde so gewählt werden, dass die Aufnahmefähigkeit des angeschlossenen Gerätes 5 in Hinsicht auf die Übertragungsgeschwindigkeit voll und ganz ausgenutzt wird. Eine Programmierung, Parametrierung und/oder Update bzw. Downgrades der Geräte 5 kann somit entsprechend schnell durchgeführt werden. Die zehn- bis zwanzigfache Übertragungsgeschwindigkeit ist dabei ohne Weiteres realisierbar. Bei größeren Installationen eine Vielzahl von Geräten 5 bzw. Applikationsmodulen mit Informationen großer Datenmengen versorgen zu können, können auch mehrere Austauschmodule 3 vorgesehen sein, über die gleichzeitig mehrere Geräte 5 mit den notwendigen Informationen versorgt werden. Vorteilhaft in diesem Zusammenhang ist, dass die für den Anschluss an den Busankoppler des EIB-Bussystems notwendige, mit dem Stecker 6 versehene Schnittstelle der Geräte 5 gleichzeitig für den Anschluss an das Austauschmodul 3 ausgenutzt werden kann, so dass bauliche Veränderungen an den Geräten 5 bzw. Applikationsmodulen nicht notwendig sind. Das zu beeinflussende Gerät 5 bzw. Applikationsmodul erkennt über eine Logik, ob es mit einem Busankoppler oder aber mit dem Austauschmodul 3 verbunden ist. Aufgrund der Ankopplungserkennung wird dann über die innere Schnittstelle des Gerätes 5 das zugehörige Übertragungsprotokoll mit der entsprechenden Übertragungsgeschwindigkeit ausgewählt.

Das Austauschmodul 3 seinerseits stellt die benötigte Versorgungsspannung für das angeschlossene Gerät 5 zur Verfügung und nimmt eine Signalanpassung, je nach verwendetem PC-Anschluss (RS232-Anschluss "Recommend Standard 232" oder USB-Anschluss) vor. Die Signalanpassung besteht beim RS232-Anschluss im Wesentlichen in der Anpassung der Spannungspegel und beim USB-Anschluss im Wesentlichen in der Protokollumsetzung bzw. -unterstützung.

Beim Informationsaustausch zwischen dem PC 1 und dem Gerät 5 wird außerdem festgestellt, welche Eigenschaften das Gerät 5 bzw. Applikationsmodul besitzt. Das Gerät 5 bzw. Applikationsmodul teilt dem PC 1 z. B. mit, welche Funktionseigenschaften vorliegen, welche Anzahl von Tasten vorhanden sind, ob es mit einer Infrarot- bzw. Funkempfangs- bzw. -sendeeinrichtung ausgerüstet ist. Ebenso benötigt der PC 1 für das richtige Übertragungsprotokoll Angaben, welche Firmware sich derzeit im Gerät 5 befindet bzw. wie groß die vorhandenen Speicherbereiche sind. Diese Angaben bzw. Informationen werden vom PC 1 benötigt, um zur Auswahl auf die, auf die Geräte 5 abgestimmte Firmware und die notwendige Parametrierung bzw. Programmierung zurück zu greifen. Außerdem wird durch den PC 1 verifiziert, ob das angeschlossene, zum Update/Downgrade ausgewählte Gerät 5 mit dem in das Gebäudeinstallationssystem zu integrierenden Geräten 5 übereinstimmt. Vorteilhaft ist hierbei, dass das Gerät 5 ohne Vorhandensein des zugehörigen Busankopplers des EIB-Bussystems eindeutig mit den speziell zugehörigen, notwendigen Informationen versorgt werden kann. Um den zum Gerät 5 bzw. zum Applikationsmodul zugehörigen Busankoppler funktionsgerecht in Betrieb nehmen zu können, wird dieser dann wie gewohnt über den vorgesehenen Bussystemanschluss projektiert bzw. programmiert.

Um einen Betrieb von vertauschten Geräten 5 bzw. Applikationsmodulen und der zugehörigen Busankoppler im Gebäudeinstallationssystem bzw. im Feld zu vermeiden, wird eine eindeutige Kennung sowohl für das Gerät 5, als auch für den zugehörigen Busankoppler bezogen auf das gerade zu projektierende Gebäudeinstallationssystem vergeben. Stimmen diese Kennungen von Gerät 5 und Busankoppler nicht überein, so deaktiviert das Gerät 5 automatisch seine projektierte Funktion, um Fehlfunktionen innerhalb des Gebäudeinstallationssystems zu vermeiden. Durch diese projektspezifische bzw. gebäudeinstallationsspezifische Kennung stellen Gerät 5 und Busankoppler fest, ob sie eine zusammenpassende bzw. zugehörige Projektierung aufweisen, während der PC 1 gleichzeitig anhand dieser Kennung die Projektierung an und für sich identifizieren kann. Selbstverständlich ist es möglich anstatt des PCs 1 ein anderes Datenverarbeitungsgerät, wie z. B. einen Laptop, ein PDA usw. zu verwenden.

Auf besonders einfache Art und Weise können bei einer solchen Informationsaustauscheinrichtung Informationen auch mit großen Datenmengen schnell und sicher zwischen einem PC 1 und den anzuschließenden Geräten 5 ausgetauscht werden.

## Patentansprüche

1. Informationsaustauscheinrichtung für an Bussysteme anschließbare Geräte der Gebäudesystemtechnik, wobei die Geräte zum Informationsaustausch und zur Funktionserfüllung im Busbetrieb jeweils über eine genormte Steckeinrichtung an die genormte Steckeraufnahmeeinrichtung eines zugehörigen Busankopplers des Bussystems angeschlossen sind, und wobei zur Datenübertragung zum Zwecke der Programmierung, Parametrierung und/oder Update oder Downgrade zumindest ein Austauschmodul (3) mit einem Personal Computer, PC (1) in Verbindung steht, **dadurch gekennzeichnet, dass** zumindest ein Austauschmodul (3) über eine serielle Verbindung (2) direkt mit dem PC (1) verbunden ist, und dass das Austauschmodul (3) zum Anschluss eines vom Bussystem entkoppelten Gerätes (5) eine, wie beim Busankoppler vorgesehene, genormte Steckeraufnahmeeinrichtung (4) aufweist, und dass das Gerät (5) mit einer Logik versehen ist, über welche das Gerät (5) erkennt, ob eine Ankopplung an einen Busankoppler oder eine Ankopplung an ein Austauschmodul (3) besteht, und dass das Gerät (5) derart aufgebaut ist, dass es aufgrund einer Ankopplungserkennung an ein Austauschmodul (3) ein Übertragungsprotokoll auswählt damit der Informationsaustausch mit der zehn- bis zwanzigfachen Busübertragungsgeschwindigkeit erfolgt.

2. Informationsaustauscheinrichtung nach Anspruch 1, **dadurch gekennzeichnet, dass** zumindest eine direkte serielle Verbindung (2) über einen Recommended Standard 232-Anschluss, RS232-Anschluss an den PC (1) angeschlossen ist.

3. Informationsaustauscheinrichtung nach Anspruch 1 oder 2, **dadurch gekennzeichnet, dass** zumindest eine direkte serielle Verbindung (2) über einen Universal Serial Bus-Anschluss, USB-Anschluss an den PC (1) angeschlossen ist.

4. Informationsaustauscheinrichtung nach Anspruch 1 oder 2, **dadurch gekennzeichnet, dass** die Geräte (5) zum Anschluss an ein European Installation Bus, ElB-Bussystem vorgesehen sind.

## Claims

1. Information exchange facility for devices in building system engineering that can be connected to a bus system with each of the devices being connected by means of a standard plug appliance to the standard plug receptacle appliance of an associated bus coupling unit for the purpose of exchanging information and for fulfilling its function in bus operations, and with at least one exchange module (3) communicating with a personal computer, PC (1) for transmitting data for programming, parameterisation and/or updating or downgrading purposes, **characterised by the fact** that at least one exchange module (3) is connected directly to the PC (1) by means of a serial connection (2) and that the exchange module (3) is provided with a standard plug receptacle appliance (4), such as that provided for the bus coupling unit, for the purpose of connecting a device (5) that is decoupled from the bus system, and that the device (5) is provided with a logic circuit by means of which the device (5) recognises whether there is currently a coupling to a bus coupling unit or a coupling to an exchange module (3), and that the device (5) is structured in such a manner that, as a result of recognising a coupling to an exchange module (3), it selects a transmission protocol in consequence of which the exchange of information takes place at the ten- or twenty-fold bus transmission rate.

2. Information exchange facility in accordance with Claim 1, **characterised by the fact** that at least one direct serial connection (2) is connected to the PC (1) by way of a Recommended Standard 232 port, RS232 port.

3. Information exchange facility in accordance with Claim 1 or Claim 2, **characterised by the fact** that at least one direct serial connection (2) is connected to the PC (1) by means of a Universal Serial Bus port, USB port.

4. Information exchange facility in accordance with Claim 1 or Claim 2, **characterised by the fact** that the devices (5) are intended for connection to a European Installation Bus, EIB bus system.

## Revendications

1. Dispositif d'échange d'informations pour des appareils raccordables à des systèmes Bus de la technologie des bâtiments pour lequel les appareils sont raccordés respectivement via un dispositif connecteur standardisé au dispositif récepteur connecteur standardisé d'un coupleur Bus correspondant d'un système Bus pour l'échange d'informations et la réalisation des fonctions dans le fonctionnement Bus, et pour lequel au moins un module d'échange (3) est en relation avec un Personal Computer PC (1) pour le transfert de données pour les besoins de la programmation, du paramétrage et/ou de l'actualisation ou du téléchargement **caractérisé par le fait qu'**au moins un module d'échange (3) est connecté directement avec le PC (1) via une connexion sérielle (2) et que le module d'échange (3) présente un dispositif récepteur connecteur (4) standardisé prévu comme au coupleur Bus pour le raccordement d'un appareil (5) désaccouplé du système Bus et que l'appareil (5) est doté d'une logique par laquelle l'appareil (5) reconnaît si un couplage au coupleur Bus ou un couplage à un module d'échange (3) existe et que l'appareil (5) est conçu de telle sorte qu'il sélectionne un protocole de transfert basé sur une détection de couplage à module d'échange (3) pour que l'échange d'informations se fasse avec dix ou vingt fois la vitesse de transfert Bus.

2. Dispositif d'échange d'informations selon la revendication 1, **caractérisé par le fait qu'**au moins une connexion sérielle directe (2) est raccordée au PC (1) via un raccordement RS 232 Standard Recommended.

3. Dispositif d'échange d'informations selon la revendication 1 ou 2, **caractérisé par le fait qu'**au moins une connexion sérielle directe (2) est raccordée au PC (1) via un raccordement Bus Universal Serial, raccordement USB.

4. Dispositif d'échange d'informations selon la revendication 1 ou 2, **caractérisé par le fait que** les appareils (5) sont prévus pour le raccordement à un système Bus EIB, European Installation Bus.
